(19) Europäisches Patentamt

European Patent Office

Office européen des brevets

(11) Publication number: **0 100 613**
**A1**

(12) **EUROPEAN PATENT APPLICATION**

(21) Application number: **83304013.2**

(22) Date of filing: **11.07.83**

(51) Int. Cl.³: **H 04 N 7/16**
**H 04 H 1/04**

(30) Priority: **09.07.82 GB 8220041**

(43) Date of publication of application:
**15.02.84 Bulletin 84/7**

(84) Designated Contracting States:
**DE FR IT**

(71) Applicant: **The General Electric Company, p.l.c.**
**1 Stanhope Gate**
**London W1A 1EH(GB)**

(72) Inventor: **Leakey, David Martin, Dr.**
**349 Dunchurch Road**
**Rugby, CV22 6HT(GB)**

(74) Representative: **Dolwin, John Davison**
**Central Patent Department The General Electric**
**Company plc Hirst Research Centre East Lane**
**Wembley Middlesex HA9 7PP(GB)**

(54) **Signal distribution networks.**

(57) A signal distribution network has a number of local service centres (11-13, 21-24) connected to main service centres (1,2) which are interconnected by a regional network (3,4). Communication between a local service centre (e.g.11) and its associated customer outlets (32) is by way of a unidirectional transmission path (30) which originates and terminates at the local switching centre (11). Each customer outlet (32) is arranged to receive "broadcast" signals on some of the signalling channels and signals individual to that outlet (32) on certain other signals. Dedicated signals received on a channel from the local service centre (11) may be inhibited at the selected customer outlet (32) and substituted by signals generated by customer apparatus.

Fig. 1.

EP 0 100 613 A1

The present invention relates to signal distribution networks and more particularly, but not exclusively, to such networks for distributing signals defining television pictures.

The Government of the United Kingdom is expected to permit the installation of a distribution network for "cable television" in the near future on the condition that the network is financed by private capital.

The least expensive method of providing such a network is by way of a transmission path having tapping points to which customers apparatus may be connected and upon which signals are "broadcast". Such a system does not permit the network to be used efficiently other than for broadcast signalling since relative to the message channel period, long guard periods must be introduced to permit transmitted signals to reach the furthest point of the network.

In order to permit signalling by the customer apparatus on the network, either in response to signals received from a service centre or at the customer's volition, it is current practice to provide an individual transmission path from the service centre to each customer outlet. The cost of providing such a network is likely to prove prohibitive to private investors seeking to recoup the capital cost from revenue in a reasonable period of time.

It is an object of the present invention to provide a signal distribution network capable of providing both unidirectional (broadcast) signalling and bi-directional signalling without providing an individual transmission path between the service centre and each customer outlet.

The term "local service centre" as used herein means apparatus for sending or receiving signals to or from a number of customer outlets.

The term "main service centre" as used herein means apparatus for sending or receiving signals to or from a number of local service centres. A main service centre may be connected to other main service centres and may also provide the facilities of a local service centre.

According to the present invention in a signal distribution network having a plurality of local service centres (as hereinbefore defined) each directly connected to a main service centre (as hereinbefore defined) by a two-way transmission path, each of said local service centres is connected to a respective plurality of customer outlets by a respective unidirectional transmission path in the form of a loop having each of its ends connected at the respective local service centre, each of said unidirectional transmission paths having a plurality of signalling channels multiplexed thereon, at least some of said channels being frequency division multiplexed channels and arranged to carry signals available at every customer outlet and at least some others of said channels being time division multiplexed channels and arranged to carry signal individual to a respective customer outlet to which such a signal is addressed.

Preferably said frequency division multiplexed(FDM) channels carry signals defining television pictures and some of said FDM channels may also be arranged to carry signals individual to a respective addressed customer outlet.

The customer outlets may be arranged, when addressed as aforesaid by a signal on one of said FDM channels to inhibit further progress of the signals received on that channel from the respective local service centre and to substitute signals (if any) on said channel for transmission to the local service centre.

Alternatively the customer outlets may be arranged when so addressed to transmit signals on a different one of said FDM channels.

The unidirectional transmission paths may be optical fibre or co-axial cable whilst the two-way transmission path may be optical fibre, co-axial cable or a radio link.

A plurality of local service centres may be connected together by a unidirectional transmission path which may be arranged such that signals between a first local service centre and a second local service centre are transmitted by way of said unidirectional path and signals between the second local service centre and the first local service centre are by way of the transmission path to a main service centre.

A signal distribution network in accordance with the invention will now be described, by way of example only, with reference to the accompanying drawings of which

Figure 1 is a block diagram of a part of such a network; and

Figure 2 is a schematic channel distribution.

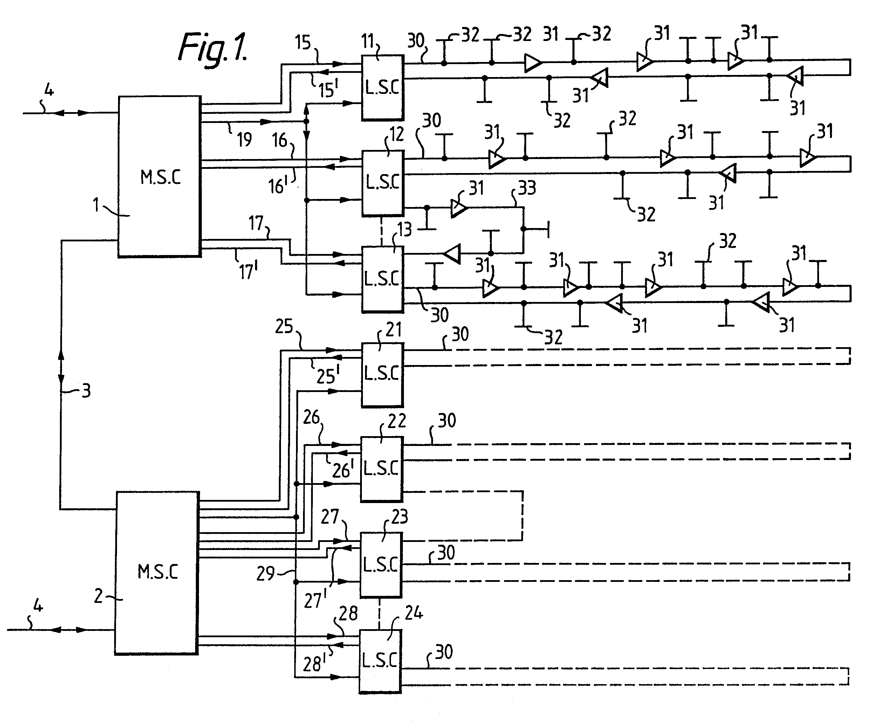

Referring to Figure 1 the network has a number of main service centres (only two of which are shown) 1, 2 each of which is connected to the other main service centres 1, 2 either directly by a transmission path 3 or indirectly by way of a transmission path 4 to other service centres (not shown) in a hierarchy. The transmission paths 3 and 4 are low loss two-way paths and may be for example co-axial cables, optical fibres, four-wire circuits or radio links with suitable balancing and amplifying circuits (not shown).

Each of the main service centres 1, 2 is connected to a number of local service centres (only some of which are shown) 11 to 13 and 21 to 24 by respective two-way transmission paths 15 15' to 17, 17' and 25, 25' to 28, 28'.

As thus far described there is little difference between the network of the invention and a conventional telephone network.

However, to provide a facility described hereinafter in the present network a respective unidirectional transmission path 19,29 connects each of the main service centres 1, 2 with all of its respective local service centres 11-13 and 21-24. It is here noted that whilst the unidirectional transmission paths 19, 29 are separately shown they may be dedicated channels of the respective two-way tranmission paths.

Since the networks in the hierarchy below the main services centres 1, 2 are substantially identical it is convenient to describe only the network associated with the main service centre 1 and to note that each of the main service centres 1, 2 and their respective local service centres 11-13 and 21-24 function in a similar manner.

Each of the local service centres 11-13 has a respective transmission path 30 in the form of a loop having each of its ends at that service centre. The transmission paths 30 include a number of unidirectional repeater/amplifiers 31 thus ensuring transmission in the reverse direction is substantially eliminated.

A number of customer outlets 32 are tapped off the transmission paths 30 wherever they may be required for connection to the customer apparatus. The transmission paths 30 may be for example co-axial cable, twisted pair cable or multiple optical fibres.

It may be convenient for certain customer outlets which are distant from one of the local service centres (say 12) to receive signals on a transmission path 33 which originates at the local service centre 12 and terminates at the local service centre 13. In this case the transmission path loop is completed by way of the transmission path I7!, the main service centre 1 and the transmission path 16.

A suitable distribution plan for the service centres includes having a main service centre 1 serving a number of local service centres 11-13 distributed in a radius of, say, one to ten kilometres. Thus the main service centre 1 would serve an area similar to that catered for by a conventional telephone exchange having between 5,000 and 20,000 customers. The local service centres 11 to 13 may conveniently be housed in a street cabinet and would each provide a service to a maximum of, say, 1,000 customer outlets in a radius of, say, one-half kilometre from the service centre.

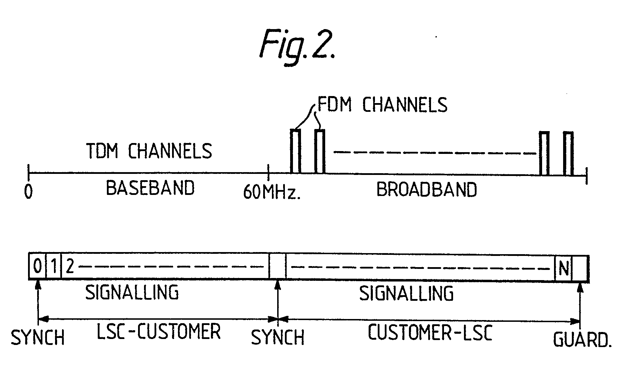

Referring also to Figure 2 the mode of operation of the transmission path 30 will now be considered.

On the transmission path 30 frequencies in the range 0 to 60 megaherts (referred to hereinafter as the 'baseband') are used to provide telephony and telemetry channels. The baseband has a digital capacity of some 30 megabits per second and may carry some 250 two-way sixty-four kilobit per second channels or fifteen two-way "viewphone" channels.

In the prior system discussed in the opening paragraphs the number of two-way channels provided by the baseband is considerably reduced since, assuming that "go" and "return" pulse bursts are used a guard period must be interposed between the "go" and "return" channels to prevent signal overlapping.

The guard period must be as long as or longer than the longest period taken for a single pulse burst to travel from end-to-end of the transmission path. In the present system the guard period is reduced to exceed the longest period for a signal to travel the transmission path 30 between the two most distantly spaced repeater/amplifiers 31.

A telephony system using a unidirectional transmission path in the form of a loop is disclosed in our copending Patent Application No. 8011068 (published serial No. 2047 048A).    The advantages of such a system will be readily appreciated by reference to that application.

In the present network the capacity of the transmission system above the baseband (hereinafter referred to as the "broadband") is used firstly to provide a number of broadcast television channels and secondly to provide a number of high-quality two-way viewphone links.

In the broadband up to fifty frequency division multiplexed (FDM) channels may be made available.    These channels may be used either for "broadcasting" that is they are available to all of the customer outlets 32 or pairs of channels may be used to provide a two-way 'viewphone' link of better quality than viewphone links using the baseband channels.

It will also be appreciated that the broadband channels may be used to provide high-speed data transmission service.

In order that the available capacity of the transmission path 30 may be more efficiently used each of the tapping points for the customer outlets 32 may be provided with a band-stop filter(s).    If a unidirectional repeater/amplifier 31 including a band-stop filter is provided at each of the customer outlets 32 then, since there will be no "backward" transmission at all the small guard period of the baseband channels may be eliminated.

Similarly since broadband channel signals received from the local service centre 1 may be prevented from continuing on the transmission path 30 the two-way viewphone links may be provided using a single channel with the signal transmitted from the local service centre 1 being replaced at the appropriate customer outlet 32 with a signal generated by apparatus at that outlet.

In operation, the main service centre 1 will receive digital data from the regional network by way of the transmission path 4 and will identify from the data received which channels are for broadcast purposes.    These "broadcast" channels are re-assembled in time-division multiplex and transmitted by way of the transmission path 19 to all of the local service centres 11 to 13.

Digital data channels received at the main-service centre 1 for two-way communication will be passed to the appropriate one of the local service centres 11-13 (say 11) where it is further processed to determine the customer outlet 32 for which it is intended.

The local service centre 11 combines the "broadcast" channels and dedicated channels, viewphone channels in FDM in the broadband and retransmits the dedicated telemetry or telephony channels in T.D.M. in the baseband on the transmission path 30.

It will be appreciated that the services provided by the "broadcast" channels may include television and radio transmission and, in combination with data or time-controlled domestic video recorders, an electronic video library service.

The two-way channels may be used for low-speed two-way data transmission for telemetering for example in connection with charging for energy consumption, burglar and fire alarms and the like.  The broadband channels being capable of offering higher speed data transmission may also be used for example with "viewdata" services such as the 'Prestel' service of British Telecom.  Each of the channels available on the transmission path 30 may also be used to provide a two-way "viewphone" service.

## Claims

1.    A signal distribution network having a plurality of local service centres (as hereinbefore defined) each directly connected to a main service centre (as hereinbefore defined) by a two way transmission path characterised in that each of said local service centres (11 - 13, 21 - 24) is connected to a respective plurality of customer outlets (32) by a respective unidirectional transmission path (30) in the form of a loop having each of its ends connected at the respective local service centre (11-13 , 21-24), each of said unidirectional transmission paths (30) having a plurality of signalling channels multiplexed thereon, at least some of said channels being frequency division multiplexed (FDM) channels arranged to carry signals available at every customer outlet (32) and at least some others of said channels being time division multiplexed (TDM) channels arranged to carry signals individual to a respective customer outlet (32) to which such a signal is addressed.

2.    A signal distribution network as claimed in Claim 1 in which said FDM channels are arranged to carry signals defining television pictures.

3.    A signal distribution network as claimed in Claim 1 or Claim 2 in which some others of said channels are FDM channels arranged to carry signals individual to a respective customer outlet (32) to which such a signal is addressed.

4.    A signal distribution network as claimed in Claim 3 in which each customer outlet (32) is arranged when addressed as aforesaid by a signal on one of said further FDM channels to inhibit further progress of the signal received on that channel from the local service centre (11-13, 21-24).

5.    A signal distribution network as claimed in Claim 4 in which each customer outlet (32) is also arranged to substitute signals on said channel for return to the respective local service centre (11-13, 21-24).

6.    A signal distribution network as claimed in Claim 3 or Claim 4 in which each customer outlet (32) when addressed as aforesaid by a signal on one of said further FDM channels is arranged to transmit signals on a different one of said FDM channels.

7.    A signal distribution network as claimed in Claim 3 or Claim 4 in which each  customer outlet (32)·when addressed as aforesaid by a signal on one of said further FDM channels is arranged to transmit signals on one of said TDM channels.

8.    A signal distribution network as claimed in any preceding claim in which each of said unidirectional transmission paths (30) is an optical fibre transmission path.

9.    A signal distribution network as claimed in any one of claims 1 to 7 in which each of said unidirectional transmission paths (30) is a co-axial cable.

10.    A signal distribution network as claimed in any preceding claim in which said two way transmission path (15, 16, 17) is an optical fibre transmission path.

11.    A signal distribution network as claimed in any one of claims 1 to 9 in which said two way transmission path (15, 16, 17) is a co-axial cable.

12.    A signal distribution network as claimed in any one of Claims 1 to 9 in which said two way transmission path (15, 16, 17) is a radio link.

13.    A signal distribution network as claimed in any preceding claim in which at least one pair of the plurality of local service centres (12 & 13) are interconnected by way of a unidirectional transmission path (33).

14.    A signal distribution network as claimed in Claim 13 in which signalling from a first of an interconnected pair of local service centres (12) to the second (13) is by way of the unidirectional transmission path (33) whilst signalling from the second (13) to the first (12) is by way of the transmission path (17',16) through an associated main service centre (1).

15. A signal distribution network as claimed in Claim 13 or Claim 14 in which said unidirectional transmission path (33) which interconnects said at least one pair of local service centres (12 & 13) also provides signalling to a plurality of customer outlets (32).

16. A signal distribution network as claimed in any preceding claim in which each main service centre (1,2) is also connected to each of its associated local service centres (11-13, 21-24) by a respective unidirectional transmission path (19,29) which path is arranged to carry the signals to be available at every customer outlet (32).

Fig.1.

# Fig.2.

FDM CHANNELS

TDM CHANNELS

BASEBAND          60MHz.          BROADBAND

0

0 | 1 | 2 — — — — — — — — — | | — — — — — — — — — | N |

SIGNALLING                    SIGNALLING

SYNCH      LSC-CUSTOMER      SYNCH      CUSTOMER-LSC      GUARD.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | IEEE TRANSACTIONS ON COMMUNICATIONS, vol. COM-23, no. 1, January 1975, pages 42-48, New York, USA A.G. HARE et al.: "Multipurpose wide-band local distribution - Proposals for an integrated system" * Page 44, left-hand column, line 20 - right-hand column, line 32; page 45, left-hand column, lines 5-51; page 45, right-hand column, line 30 - page 46, left-hand column, line 32 * | 1-12, 16 | H 04 N 7/16 H 04 H 1/04 |
| Y | THE BELL SYSTEM TECHNICAL JOURNAL, vol. 50, no. 9, November 1971, pages 2947-2978, American Telephone and Telegraph Company, New York, USA J.F. HAYES et al.: "Traffic analysis of a ring switched data transmission system" * Page 2949, line 4 - page 2950, line 21; page 2951, lines 8-13 * | 1-12 | |
| Y | EP-A-0 009 627 (SIEMENS) * Page 2, lines 7-34; page 9, lines 6-26 * | 8 | |
| Y | EP-A-0 003 823 (HEINRICH-HERTZ-INSTITUT) * Page 10, line 17 - page 11, line 35 * | 6 | |
|  | --- -/- | | |

**TECHNICAL FIELDS SEARCHED (Int. Cl. ³)**

H 04 N 7/00
H 04 H 1/00

The present search report has been drawn up for all claims

| Place of search THE HAGUE | Date of completion of the search 21-10-1983 | Examiner DE ROECK A.F.A. |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | CONFERENCE RECORD, 1978 INTERNATIONAL CONFERENCE ON COMMUNICATIONS, vol. 2 of 3 volumes, 4th-7th June 1978, pages 21.2.1-21.2.4, Toronto, CA.<br>W.W. COTTEN: "A digital television fiber-optic trunking system" * Page 21.2.1, left-hand column, paragraph 6 - right-hand column, paragraph 1 * | 10 | |
| | --- | | |
| Y | RUNDFUNKTECHNISCHE MITTEILUNGEN, vol. 20, no. 2, April 1976, pages 61-64, Hamburg, DE.<br>T.M. STRAUS: "Planung der Zweiwege-Kommunikation in einer grossen Kabelfernsehanlage" * Page 62, right-hand column, lines 27-32 * | 12 | |
| | --- | | TECHNICAL FIELDS SEARCHED (Int. Cl. ³) |
| Y | IEEE TRANSACTIONS ON COMMUNICATIONS, vol. COM-23, no. 1, January 1975, pages 49-55, New York, USA<br>K. ROSE et al.: "Design of a switched broad-band communications network for interactive services" * Page 50, right-hand column, paragraph 2 * | 16 | |
| | ----- | | |

The present search report has been drawn up for all claims

| Place of search | Date of completion of the search | Examiner |
|---|---|---|
| THE HAGUE | 21-10-1983 | DE ROECK A.F.A. |